# EUROPÄISCHE PATENTSCHRIFT

(11) **EP 1 485 636 B1**
(45) Veröffentlichungstag und Bekanntmachung des Hinweises auf die Patenterteilung: **22.04.2009**
(21) Anmeldenummer: 02781152.0
(22) Anmeldetag: 05.11.2002
(51) Int. Cl.: F16H 1/28, H02K 7/116

(54) **STELLANTRIEB**
ACTUATOR
MECANISME DE COMMANDE

(30) Priorität: 13.03.2002 DE 10211208
(43) Veröffentlichungstag der Anmeldung: 15.12.2004
(73) Patentinhaber: ROBERT BOSCH GMBH, 70442 Stuttgart (DE)
(72) Erfinder: BOLZ, Martin-Peter, 77815 Buehl (DE)
(86) Internationale Anmeldenummer: PCT/DE2002/004094
(87) Internationale Veröffentlichungsnummer: WO 2003/078863

(56) Entgegenhaltungen:
- CH-A- 108 141
- DE-A- 4 026 886
- DE-A- 4 412 898
- DE-U- 8 513 219

## Beschreibung

### Stand der Technik

Die Erfindung geht von einem Stellantrieb nach dem Oberbegriff des Anspruchs 1 aus.

Grundsätzlich besteht ein Wunsch nach immer leistungsstärkeren und kompakteren Stellantrieben. In der Kraftfahrzeugindustrie werden diese z.B. zum Antrieb von Scheibenwischern, Fensterhebern, Sitzen, Schiebedächern oder dgl. eingesetzt. Insbesondere bei Zweimotoren-Wischanlagen werden Stellantriebe benötigt, die ein sehr hohes Moment erzeugen und in einem äußerst beengten Bauraum untergebracht werden müssen. Ziel ist es z.B. einen Stellantrieb mit einem Bauvolumen von ungefähr 500 cm³ zu schaffen, der mit einem reversierbaren Elektromotor mit 60 Zyklen pro Sekunde ein Abtriebsmoment von 35 Nm erzeugt.

Aus der DE 100 03 350 A1 ist eine Verstellvorrichtung zum Verstellen eines zweiten Teiles gegenüber einem ersten Teil, insbesondere zum Verstellen von Gelenkteilen bekannt, wie z.B. Robotergelenkteilen. Die Vorrichtung umfasst einen Elektromotor, z.B. einen schnell laufenden Elektromotor kleiner Baugröße mit einem geringen Drehmoment, der über ein Planetengetriebe mit einer hohen Untersetzung das erste Bauteil zum zweiten Bauteil verstellt. Das Planetengetriebe ist als ein reduziertes Koppelgetriebe ausgebildet, das auch kurz Wolfrom-Getriebe genannt wird. Es besitzt zwei Zentralräder, die als Hohlräder mit Innenverzahnungen ausgebildet-sind, und jeweils mit Planetenrädern mit entsprechenden Außenverzahnungen kämmen. Ein Zentralrad ist mit dem ersten Bauteil fest verbunden, während das andere Zentralrad mit dem zweiten Bauteil fest verbunden und relativ zum ersten Zentralrad drehbar gelagert ist. In der Regel ist das erste Bauteil ortsfest, indem es beispielsweise mit einem Gehäuseteil des Elektromotors verbunden ist. Das erste Zentralrad bildet mit den ihm zugeordneten Planetenrädern eine erste Getriebestufe, während das zweite Zentralrad mit den ihm zugeordneten Planetenrädern eine zweite Getriebestufe bildet. Die Planetenräder beider Getriebestufen sind jeweils drehfest miteinander verbunden. Eine der Getriebestufen wird von der Motorwelle des Elektromotors über ein Sonnenrad angetrieben. Durch die Wahl der Übersetzungen der Getriebestufen kann erreicht werden, dass der Abtrieb des Stellantriebs relativ zum Antrieb eine gleiche oder eine entgegengesetzte Drehrichtung aufweist. Ferner ergibt sich aus einer hohen Untersetzung des bekannten Planetengetriebes verbunden mit einem entsprechenden Wirkungsgrad eine Selbsthemmung, so dass zwar vom Antrieb zum Abtrieb ein Drehmoment übertragen werden kann, jedoch nicht in umgekehrter Richtung vom Abtrieb zum Antrieb hin.

Solche Planetengetriebe sind ferner aus VDI-Berichte 672, Verein deutscher Ingenieure "Planetengetriebe, eine leistungsfähige Komponente der Antriebstechnik", VDI-Verlag 1988, bekannt. Auf den Seiten 146, 147 sind in Bild 2 und Bild 3 selbsthemmungsfähige Planetengetriebe gezeigt und unter Ziffer 3 auf Seite 147 die Bedingungen für eine Selbsthemmung definiert.

Aus der US 4 918 344 ist ferner ein langsam laufender Servoantrieb für Roboter und ähnlich automatisch steuerbare Maschinen bekannt. Der Antriebsmotor umfasst beispielsweise einen Gleichstrommotor, einen Wechselstrommotor, Direktantriebsmotor oder Schrittmotor, der mit einem hoch untersetzenden Planetengetriebe zusammenarbeitet. Das Planetengetriebe ist ein Reibungsplanetengetriebe, bei dem die Momente zwischen den Getriebeelementen, den Zentralrädern und den Planetenrädern kraftschlüssig durch Reibung übertragen werden. Die Zentralräder und die Planetenräder sind als Rollen ausgebildet. Durch Schlupf zwischen den Getriebeelementen ist eine eindeutige Zuordnung der Stellbewegung am Antrieb zur Stellbewegung am Abtrieb nicht gewährleistet.

Das Planetengetriebe, das kompakt und leicht gestaltet ist, ist zumindest teilweise innerhalb eines hohlzylindrischen Rotors des Elektromotors untergebracht. Der Rotor treibt über eine Scheibe ein Sonnenrad einer ersten Getriebestufe an, deren Planetenräder in kraftschlüssiger Verbindung mit dem Sonnenrad und einem ersten Hohlrad stehen, das mit dem Gehäuse des Elektromotors drehfest verbunden ist. Ein Planetenträger, an dem die Planetenräder der ersten Getriebestufe drehbar gelagert sind, ist mit einem weiteren Sonnenrad gekoppelt, das mit entsprechenden Planetenrädern und einem zweiten Hohlrad zu einer zweiten Getriebestufe gehört. Ein zweiter Planetenträger, an dem die Planeten der zweiten Getriebestufe drehbar gelagert sind, ist mit der Abtriebswelle des Stellantriebs gekoppelt, während die Planetenräder sich kraftschlüssig an dem zweiten gehäusefesten Hohlrad abstützen. Das Planetengetriebe, das auch als einstufiges Getriebe ausgebildet sein kann, besitzt keine Selbsthemmung.

Mit der DE 85 13 219 U, welcher den Oberbegriff des Anspruchs 1 offenbart, ist ein Elektromotor mit einem integrierten Planetengetriebe bekannt gewor-Mit der DE 85 13 219 ist ein Elektromotor mit einem integrierten Planetengetriebe bekannt geworden, bei dem innerhalb des Rotors Planetenräder gelagert sind, die mit Stirnzahnrädern zusammenwirken, die auf der zentralen Abtriebsachse angeordnet sind. Die Planetenräder sind dabei im käfigartigen Rotor gelagert, der zusammen mit der zentralen Welle die Planetenräder und die Zentralräder umschließt.

Die DE 44 12 898 A1 zeigt ein Planetengetriebe mit integriertem Elektromotor, bei dem ein Rotor axial benachbart zum Stator angeordnet ist. Innerhalb des Stators sind als Zentralräder zwei sich überlappende Hohlzahnräder angeordnet, die mit entsprechenden Planetenrädern zusammenwirken. Die Planetenräder sind dabei im axial benachbart zu den Hohlrädern angeordneten Rotor gelagert.

### Vorteile der Erfindung

Nach der Erfindung treibt der Elektromotor einen Planetenträger an, an dem die drehfest miteinander verbundenen Planetenräder der beiden Getriebestufen drehbar gelagert sind. Die Planetenräder kämmen mit zwei zentralen Zahnrädern, die als innen verzahnte Hohlräder ausgebildet sind. Von den beiden Zentralrädern ist ein erstes mit einem Gehäuse des Elektromotors fest verbunden, während ein zweites Zentralrad drehbar angeordnet ist und mit der Abtriebswelle gekoppelt ist. Die durch die Zentralräder und die zugeordneten Planetenräder gebildeten Getriebestufen haben eine geringfügig unterschiedliche Untersetzung, so dass sich insgesamt eine hohe Gesamtuntersetzung ergibt. Trotzdem verfügt das Planetengetriebe im Vergleich mit anderen hoch untersetzenden Getrieben, wie zum Beispiel im Vergleich mit Schneckengetrieben, einen besseren Wirkungsgrad, ohne dass auf eine Selbsthemmung des Getriebes verzichtet werden muss.

Da das Planetengetriebe eine im Wesentlichen rotationssymmetrische Bauform besitzt, lässt es sich gut in einen Elektromotor integrieren, indem sein Planetenträger mit einem Rotor des Elektromotors drehfest verbunden ist und zweckmäßigerweise mit diesem eine Baueinheit bildet. Die als Hohlräder ausgebildeten Zentralräder sind zu beiden Seiten einer Radscheibe des Planetenträgers angeordnet, die mit einer Nabe drehbar auf der Abtriebswelle gelagert ist. Um eine kurze axiale Baulänge zu erhalten, ist es vorteilhaft, wenn die Zentralräder von einem als Rückschlußring ausgebildeten Mantel des Planetenträgers, auf dem der Rotor des Elektromotors angeordnet ist, mindestens teilweise axial überlappt werden.

Ein solcher erfindungsgemäßer Stellantrieb eignet sich insbesondere in Verbindung mit einem elektronisch kommutierten Gleichstrommotor zum Antrieb eines Scheibenwischers eines Kraftfahrzeugs, da er bei einer große Leistungsdichte und Selbsthemmung nur einen geringen Einbauraum beansprucht. Eine Selbsthemmung ist beispielsweise gewährleistet, wenn
- das Getriebe ein einfaches 3-Wellen-Planetengetriebe mit angetriebenem Planetenträger und einem festgehaltenen Sonnenrad (Hohl- oder Stirnrad) ist,
- das Gehäuse und der Abtrieb entweder beide eine Innen- oder beide eine Außenverzahnung aufweisen, weil dadurch unterschiedliche Vorzeichen der Momente in der Planetenachse erzeugt werden,
- und die Momente, die beim Antrieb von der Abtriebsseite her auf die Planetenachse wirken, sich nahezu ausgleichen bzw. das entgegen der Kraftrichtung wirkende Moment größer als das in Kraftwirkung wirkende Moment ist.

### Zeichnung

Weitere Vorteile ergeben sich aus der folgenden Zeichnungsbeschreibung. In der Zeichnung ist ein Ausführungsbeispiel der Erfindung dargestellt. Die Zeichnung, die Beschreibung und die Ansprüche enthalten zahlreiche Merkmale in Kombination. Der Fachmann wird die-Merkmale zweckmäßigerweise auch einzeln betrachten und zu sinnvollen weiteren Kombinationen zusammenfassen.

Es zeigen:

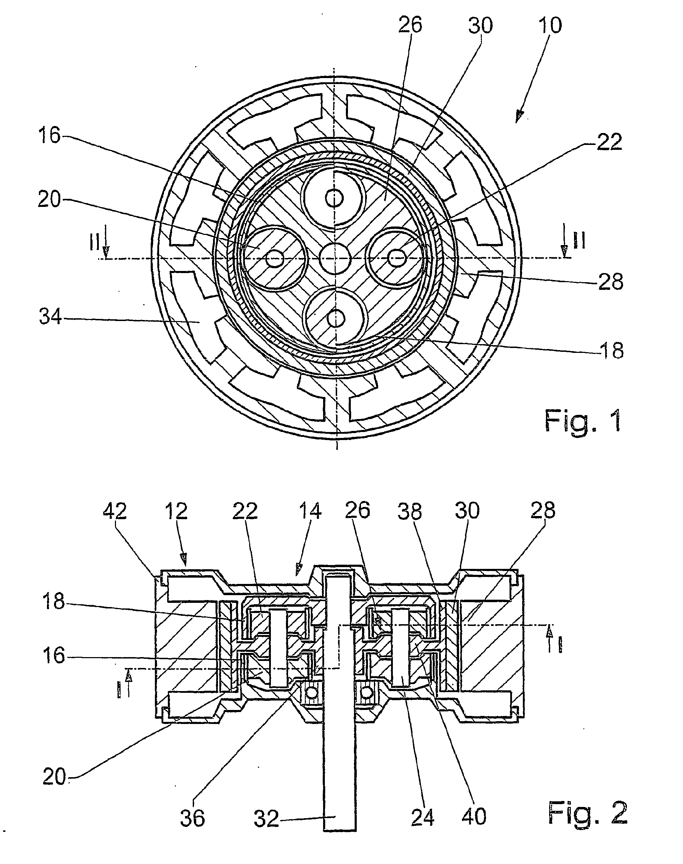

- Fig. 1: einen Querschnitt entsprechend der Linie I-I in Fig. 2 und
- Fig. 2: einen Längsschnitt entsprechend der Linie II-II in Fig. 1.

### Beschreibung des Ausführungsbeispiels

Ein Stellantrieb 10 umfasst einen Elektromotor 12, vorzugsweise einen elektronisch kommutierten Gleichstrommotor, mit einem Stator 28 und einem Rotor 30. Im Stator 28 sind Räume 34 für Wicklungen vorgesehen. Die Wicklungen werden in üblicher Weise über eine nicht näher dargestellte Steuereinheit bestromt.

Im Inneren des im Wesentlichen hohlzylindrischen Rotors 30 ist ein Zahnradgetriebe 14 in Planetenbauweise untergebracht, kurz Planetengetriebe genannt. Es umfasst einen Planetenträger 26, der einen Mantel 38 und eine Radscheibe 40 aufweist und mittels einer Nabe 36 auf einer Abtriebswelle 32 drehbar gelagert ist. Der Mantel 38 des Planetenträgers 26 ist drehfest mit dem Rotor 30 verbunden und bildet mit diesem zweckmäßigerweise eine Baueinheit. Er überdeckt mindestens teilweise -zwei Zentralräder 16, 18, die gleichartig, nämlich als Hohlräder ausgebildet sind. Ein erstes Zentralrad 16 ist mit einem Gehäuseteil 42 des Elektromotors 12 drehfest verbunden, während ein zweites Zentralrad 18 mit der Abtriebswelle 32 gekoppelt ist.

Am Planetenträger 26 sind Planetenräder 20 und 22 mittels Planetenachsen 24 drehbar gelagert. Die Planetenräder 20, von denen jeweils vier auf dem Umfang verteilt sind, bilden mit dem ersten Zentralrad 16 eine erste Getriebestufe, während die Planetenräder 22 in gleiche Weise mit dem zweiten Zentralrad 18 eine zweite Getriebestufe bilden. Den Planetenrädern 20 der ersten Getriebestufe ist jeweils ein Planetenrad 22 der zweiten Getriebestufe zugeordnet. Die einander zugeordneten Planetenräder 20, 22 sind drehfest miteinander verbunden. Die Untersetzungen der beiden Getriebestufen unterscheiden sich geringfügig, indem die beiden Zentralräder 16, 18 und/oder die zugehörigen Planetenräder 20, 22 unterschiedliche Zähnezahlen aufweisen, so dass sich insgesamt eine hohe Untersetzung des Planetengetriebes 14 ergibt.

Der Antrieb des Stellantriebs 10 erfolgt über den Rotor 30 des Elektromotors 12 auf den Planetenträger 26 des Planetengetriebes 14, wobei die Planetenräder 20 im feststehenden, ersten Zentralrad 16 abwälzen und dabei die Planetenräder 22 antreiben. Diese treiben ihrerseits das zweite Zentralrad 18 an, das drehfest mit der Abtriebswelle 32 verbunden ist.

Grundsätzlich ist es auch möglich, dass das zweite Zentralrad 18 mit einem Gehäuseteil 42 fest verbunden ist, während das erste Zentralrad 16 drehfest auf der Abtriebswelle 32 sitzt. Durch eine entsprechende Auswahl der Untersetzungen der Getriebestufeh kann die Gesamtuntersetzung des Planetengetriebes 14 in weiten Grenzen variiert werden, ohne das der Wirkungsgrad des Planetengetriebes 14 nennenswert verschlechtert wird oder die Selbsthemmung verloren geht. Die Zusammenhänge zwischen den Übersetzungen, dem Wirkungsgrad und der Selbsthemmung sind z.B. in Konstruktionsbücher, Band 26, "Zahnradgetriebe", Johannes Looman, Springer-Verlag Berlin 1970, Seiten 26 bis 31 für vergleichbare Planetengetriebe dargestellt.

## Patentansprüche

1. Stellantrieb (10) mit einem Elektromotor (12), der über ein Zahnradgetriebe (14) in Planetenbauweise, das ein erstes gehäusefestes Zentralrad (16) und ein zweites drehbares Zentralrad (18) umfasst, eine Abtriebswelle (32) antreibt, wobei beide Zentralräder (16, 18) jeweils mit mindestens einem Planetenrad (20, 22) Getriebestufen mit unterschiedlichen Untersetzungen bilden und das zum ersten Zentralrad (16) gehörige Planetenrad (20) mit dem zum zweiten Zentralrad (18) gehörigen Planetenrad (22) drehfest verbunden ist, **wobei** der Elektromotor (12) einen Planetenträger (26) antreibt, an dem die Planetenräder (20, 22) drehbar gelagert sind, **dadurch gekennzeichnet, dass**
die beiden Zentralräder (16, 18) Hohlräder sind, zwischen denen axial eine Radscheibe (40) des Planetenträgers (26) angeordnet und mit einer Nabe (36) auf der Abtriebswelle (32) gelagert ist und am äußeren Umfang einen zylindrischen Mantel (38) besitzt, auf dem ein Rotor (30) des Elektromotors (12) sitzt.

2. Stellantrieb (10) nach Anspruch 1, **dadurch gekennzeichnet, dass** die Untersetzungen der Getriebestufen so gewählt sind, dass das Planetengetriebe (14) Selbsthemmung aufweist.

3. Stellantrieb (10) nach Anspruch 1, **dadurch gekennzeichnet, dass** sich die Zentralräder (16, 18) mit dem Mantel (38) axial mindestens teilweise überlappen.

4. Stellantrieb (10) nach einem der vorhergehenden Ansprüche, **dadurch gekennzeichnet, dass** der Elektromotor (12) ein elektronisch kommutierter Gleichstrommotor ist.

5. Stellantrieb (10) nach einem der vorhergehenden Ansprüche, **dadurch gekennzeichnet, dass** er zum Antrieb eines Scheibenwischers eines Kraftfahrzeugs dient.

## Claims

1. Actuating drive (10) having an electric motor (12) which drives an output drive shaft (32) via a gearwheel mechanism (14) of planetary design which comprises a first central gear (16), which is fixed to the housing, and a second, rotatable central gear (18), wherein the two central gears (16, 18) in each case form, together with at least one planet gear (20, 22), gear stages with different step-down ratios and the planet gear (20), which is associated with the first central gear (16), is connected in a rotationally fixed manner to the planet gear (22) which is associated with the second central gear (18), wherein the electric motor (12) drives a planet carrier (26) on which the planet gears (20, 22) are rotatably mounted, **characterized in that** the two central gears (16, 18) are sun gears between which a wheel disc (40) of the planet carrier (26) is axially arranged and is mounted on the output drive shaft (32) by way of a hub (36) and on the outer circumference has a cylindrical casing (38) on which a rotor (30) of the electric motor (12) is seated.

2. Actuating drive (10) according to Claim 1, **characterized in that** the step-down ratios of the gear stages are selected such that the planetary gear mechanism (14) exhibits self-locking.

3. Actuating drive (10) according to Claim 1, **characterized in that** the central gears (16, 18) at least partially overlap the casing (38) in the axial direction.

4. Actuating drive (10) according to one of the preceding claims, **characterized in that** the electric motor (12) is an electronically commutated DC motor.

5. Actuating drive (10) according to one of the preceding claims, **characterized in that** it serves to drive a windscreen wiper of a motor vehicle.

## Revendications

1. Mécanisme de commande (10) comprenant un moteur électrique (12) qui entraîne un arbre de sortie (32) par le biais d'une transmission à engrenage (14) de construction planétaire, qui comprend une première roue centrale (16) fixée au boîtier et une deuxième roue centrale rotative (18), les deux roues centrales (16, 18) formant à chaque fois avec une roue planétaire (20, 22) des rapports de transmission avec des démultiplications différentes, et la roue planétaire (20) appartenant à la première roue centrale (16) étant connectée de manière solidaire en rotation à la roue planétaire (22) appartenant à la deuxième roue centrale (18), le moteur électrique (12) entraînant un porte-satellites (26) sur lequel sont montées à rotation les roues planétaires (20, 22),
**caractérisé en ce que**
les deux roues centrales (16, 18) sont des couronnes entre lesquelles est disposé axialement un disque de roue (40) du porte-satellites (26) qui est monté avec un moyeu (36) sur l'arbre de sortie (32), et qui possède à sa périphérie extérieure une enveloppe cylindrique (38) sur laquelle repose un rotor (30) du moteur électrique (12).

2. Mécanisme de commande (10) selon la revendication 1, **caractérisé en ce que** les démultiplications des rapports de transmission sont choisies de telle sorte que la transmission à engrenage (14) présente un autoblocage.

3. Mécanisme de commande (10) selon la revendication 1, **caractérisé en ce que** les roues centrales (16, 18) chevauchent axialement au moins en partie l'enveloppe (38).

4. Mécanisme de commande (10) selon l'une quelconque des revendications précédentes, **caractérisé en ce que** le moteur électrique (12) est un moteur à courant continu commuté de manière électronique.

5. Mécanisme de commande (10) selon l'une quelconque des revendications précédentes, **caractérisé en ce qu'**il sert à l'entraînement d'un essuie-glace d'un véhicule automobile.
